# EUROPEAN PATENT APPLICATION

(11) **EP 4 646 930 A1**
(43) Date of publication of application: **12.11.2025**
(21) Application number: 24382512.2
(22) Date of filing: 10.05.2024
(51) Int. Cl.: A01N 31/06, A01P 17/00

(54) **LONG-DURATION FORMULATION**

(71) Applicant: Glycoscience, S.L., 48160 Derio (ES)
(72) Inventor: SUTTON, Peter William, 08195 MIRA-SOL, SANT CUGAT DEL VALLÈS (ES)
(74) Representative: Sugrañes, S.L.P.

(57) **Abstract**

The present invention relates to a formulation. It exhibits a long-duration insect repellent effect. It relates also to the use of said repellent formulation, to said formulation for use as a medicament, to a method of use thereof, and to a composition comprising said formulation.

## Description

### FIELD OF THE INVENTION

The present invention relates to a long-duration formulation, in particular to an insect repellent formulation having a long-duration effect.

### BACKGROUND ART

Land and air-borne arthropods represent the most common vectors for the transmission of disease to humans. Due to increasing global temperatures, there has been an expansion in the number of regions affected by these diseases as they become suitable habitats for their respective vectors.

One method of combating bites from these arthropods, and more specifically insects, is to use insect repellents. The active ingredients currently used in most commercially available topical insect repellents are spatial repellents. There are several approved synthetic topical insect repellents on the market including DEET (N,N-diethyltoluamide), Picaridin and IR3535, but none of them is ideal. For example, DEET has a pungent odour, leaves a waxy feel and can dissolve plastics and synthetic fabrics. Furthermore, there is a public perception that these synthetic molecules are harmful to the health resulting in a rapidly growing market for natural alternatives.

A wide range of natural molecules are known to provide an insect repellent effect, but the majority are too volatile and provide protection for only a very short time-period. In fact, p-menthane-3,8-diol (PMD), which is active against a wide variety of insects, is the only natural insect repellent recognized by the World Health Organisation, being sufficiently high boiling to allow slow evaporation over a number of hours.

In Borrego et al., Effect of the Stereoselectivity of para-Menthane-3,8-diol Isomers on Repulsion toward Aedes albopictus, J. Agric. Food Chem., 2021, 69, 11095-11109, it is disclosed a diastereodivergent method to synthesize each diastereoisomer of PMD from enantiopure citronellal and studies their repellence activity against Aedes albopictus. It is further disclosed (+)-*cis*-PMD has the highest repellence index, whereas (+)-*trans*-PMD and (-)-*trans*-PMD have a slight effect.

Commercial repellent products typically have an effective duration of between 4 and 6 hours after each application. However, as the insect species of concern in a given environment are displaced by other invasive species, established commercially available repellent products may no longer provide suitable protection. Using one non-limiting example, commercially available topical insect repellents have been designed to combat mosquitoes that bite in the morning or evening where a short duration of action is suitable. With the unprecedented expansion in the population of the daytime feeding *Aedes* species of mosquito (commonly known as the Asian tiger mosquito), responsible for the transmission of Zika, Dengue and Chikingunya viruses, multiple applications of currently available repellents and compositions are required. Due to busy lifestyles, periodic repellent application is easily forgotten until bitten, leaving the user open to disease contraction. To mitigate this issue, traditional repellent products containing increased concentrations of active ingredient can be applied, but increased exposure can lead to multiple issues such as toxicity and irritancy.

Topical and spatial repellents are volatile molecules that, upon evaporation, provide a protective zone above the skin or in the surrounding area that prevents mosquitos from landing and/or biting through complex mechanisms that are not fully understood. Each active ingredient has a minimum effective evaporation rate (MEER). A rate of evaporation above this threshold results in non-productive loss, reducing the time-period during which the repellent is effective, after which the concentration is no longer sufficient to meet the MEER.

The development of insect repellent products that allow the controlled release of their active ingredients should overcome many issues related to current ones by increasing duration whilst at the same time reducing the concentration of active ingredient required. Due to the lower quantity of active ingredient required, this would result in additional benefits such as reduction in smell, reduced irritancy and avoidance of the greasy feel often associated with such products.

Furthermore, such methods would be attractive because they would potentially allow other natural repellents, which cannot currently be used due to their higher volatility, to be employed which is important as a wider range of viable repellent molecules could reduce incidents of resistance.

Two main technical solutions have been disclosed in the art for the slow release of insect repellents: entrapment approach and precursor approach.

In the entrapment approach, slow release of the insect repellent is obtained by entrapment, for example, within microcapsules (e.g., EP-A-0348550), lipospheres (EP-A-0502119), polymer (US4774082) or copolymer (US6180127) matrices from which the active ingredient is slowly released over time from the surface of interest following application of the repellent product to the whole surface or, as in the case of repellent bracelets, to a zone of the body.

In the precursor approach, altering the physicochemical characteristics of the active ingredient by preparation of a prodrug or conjugation to an appropriate carrier molecule offers an alternative method of controlled release, where the active ingredient is released by environmental mechanisms which can prolong the time during which the MEER is maintained whilst at the same time avoiding the need to apply a large excess of the active ingredient. The use of different precursors has been disclosed in the art, for example, fatty acid conjugates (USA-2004/014811), water-soluble ester and ether prodrugs (EP-A-2439188), five and six-membered ring cyclic acetals (WO-A-99/00377), water-soluble conjugates to one or more sugar rests (JP-A-2000-096078), conjugates to polycarboxylic acids or polyols (WO-A-2016/071521), conjugates to hyaluronic acid (WO-A-2016/071521), conjugates to crystalline carriers (WO-A-2010/144755), conjugates to crosslinked, polymeric gel composition (US6846491), conjugates to vanillin (WO-A-2007082306, WO-A-2017/081445), conjugates to ketones or aldehydes (GB-A-2581375), and 3'-ketoglycosides (WO-A-2021/160670).

Another approach known in the art is the use of formulation technology to obtain a slow release of the active. For example, in WO-A-2023/099327 it is disclosed a slow-release formulation, which comprises: *p*-menthane-3,8-diol (PMD), a glycoside, an organic acid, and a divalent metal halide salt. Said formulation is able to release an effective concentration of PMD, on human skin to act as insect repellent over a long period.

Despite the various proposals available in the state of the art, there is still a need for new more effective formulations to be used for the long-duration of natural active materials, which show sufficient release rate of the active to perform a long duration repellent effect.

### SUMMARY OF INVENTION

An aspect of the present invention is a formulation.

Another aspect of the invention is the use of said formulation.

Another aspect of the invention is said formulation for use as medicament.

Another aspect of the invention is a method of use of said formulation.

Another aspect of the invention is a composition comprising said formulation.

### BRIEF DESCRIPTION OF DRAWINGS

Figure 1 shows the eight isomers of PMD.
Figures 2.1 and 2.2 show the chemical structures of further insect repellent compounds.

### DESCRIPTION OF THE INVENTION

The object of the present invention is a formulation comprising:
a) a combination of p-menthane-3,8-diol (PMD) isomers,
b) a glycoside,
c) an organic acid, and
d) a divalent metal halide salt

wherein said combination of PMD isomers comprises a substantially pure PMD enantiomer selected from (-)-*trans*-PMD, (+)-*trans*-PMD, (+)-*cis*-PMD and (-)*-cis-*PMD, in combination with either
   i) a racemate PMD selected from (±)-*trans*-PMD, comprising the enantiomers of formula (I) and (II): 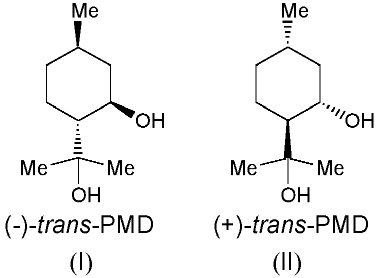 and (±)-*cis*-PMD comprising the enantiomers of formula (III) and (IV): 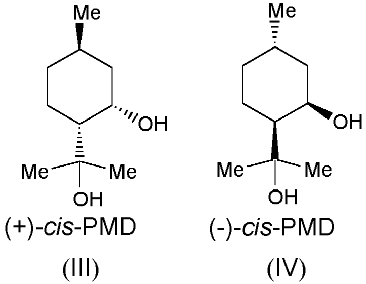 or
   ii) a substantially pure PMD enantiomer selected from (-)-*trans*-PMD, *(+)-trans-*PMD, (+)-*cis-*PMD and (-)-*cis-*PMD,
wherein in the case i), the weight ratio between the racemate PMD and the substantially pure PMD enantiomer is comprised between 1:99 and 99:1, and
wherein in the case ii), the combination of substantially pure PMD enantiomers comprises at least two different substantially pure PMD enantiomers, and wherein any racemate formed by two substantially pure PMD enantiomers and a combination consisting of a pure enantiomer are excluded.

The authors of the present invention have developed a formulation, which provides a longer duration repellent effect, compared to free PMD in traditional formulations (e.g., ethanol alone or ethanol/isopropanol), which comprises a specific combination of PMD isomers, a glycoside, an organic acid and a divalent metal halide salt. Further, the formulation is substantially odourless, i.e., it shows very low odour, in particular, when the compound (-)-*trans*-PMD is present therein.

The use of specific isomeric mixtures has the advantage of achieving almost complete protection at low application rates and maintaining the extended effect, as shown in the examples, compared to the use of a pure PMD enantiomer or of a racemic form.

In the present description, as well as in the claims, the singular forms "a", "an" and "the" include the plural reference unless the context clearly indicates otherwise. The ranges defined by the preposition the terms "between ... and ..." or by the terms "from ...to..." include also the two ends thereof. The term "about" refers to a deviation of plus/minus 10%, preferably plus/minus 5%. The percentages are expressed in % by weight (wt%), unless stated the contrary.

As used herein, the term "repellent" refers to any substance or mixture of substances used to repel any insect and parasite, as well as their eggs and larvae. It is anticipated that the insecticide formulation described can also be effective against mites, mosquitoes, ticks (Lyme disease), midges, horse flies, sand flies, head lice, cat fleas, land leeches, and numerous other insects and their eggs and larvae. Herein, the repellent as defined has a preferred use to repel flying insects (e.g., mosquitoes) and ticks.

As used herein, "substantially pure PMD enantiomer" refers to an enantiomeric ratio of at least 90:10, preferably, at least 95:5, preferably at least 96:4, more preferably at least 97:3, more preferably at least 98:2, and yet more preferably at least 99:1 over the rest of isomers.

As used herein, "pure PMD enantiomer" refers to a single enantiomer within the limits of detection of NMR analysis methods, which substantially corresponds to an enantiomeric ratio of 100:0 over the rest of isomers.

As used herein, the terms (-)-*trans*-PMD, (+)-*trans*-PMD, (+)-*cis*-PMD and (-)-*cis*-PMD refer to substantially pure PMD enantiomers, unless stated the contrary.

The enantiomeric ratio is the ratio of the percentage of one enantiomer in a mixture to that of the other e.g. 70(+) : 30(-), as disclosed in IUPAC, Pure & Appl. Chem., Basic terminology in stereochemistry, 1996,68(12), 2207.

As used herein, a "racemate" is an equimolar mixture of a pair of enantiomers. It does not exhibit optical activity. The chemical name or formula of a racemate is distinguished from those of the enantiomers by the prefix (±)- or rac-(or racem-) or by the symbols RS and SR, as disclosed in IUPAC, *op.cit.,* page 2216.

As exposed above, the scope of the invention excludes any racemate formed by two substantially pure PMD enantiomers and a combination of PMD isomers consisting of a pure enantiomer.

### PMD

Alcohol 2-(2-hydroxypropan-2-yl)-5-methylcyclohexan-1-ol is also known as p-menthane-3,8-diol (PMD), and it corresponds to the following structure (I):

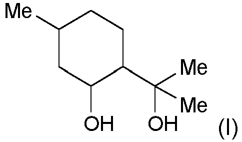

In the context of the invention, the term "PMD" refers to p-menthane-3,8-diol and represents any isomer, racemates or diastereomeric mixtures derived from compound of formula (I).

The PMD for use in the present invention may be derived from a natural source, synthetic, or a mixture thereof. The PMD for use in the present invention may be a substantially pure form of the compound, i.e., NMR or GC purity higher than 95%, 97%, or 99%, a crude extract, or a chemically modified crude extract, for example, by treatment under acidic conditions of a crude extract from a natural source.

The purity of PMD may be determined by GC using a method disclosed in the literature, for example, in Barasa et al., Repellent Activities of Stereoisomers of p-Menthane-3,8-diols Against Anopheles gambiae (Diptera: Culicidae), J. Med. Entomol., 2002, 39(5), 736-741.

The purity of PMD may be determined by NMR using a method disclosed in the literature, for example, in Borrego *et al., op. cit.*

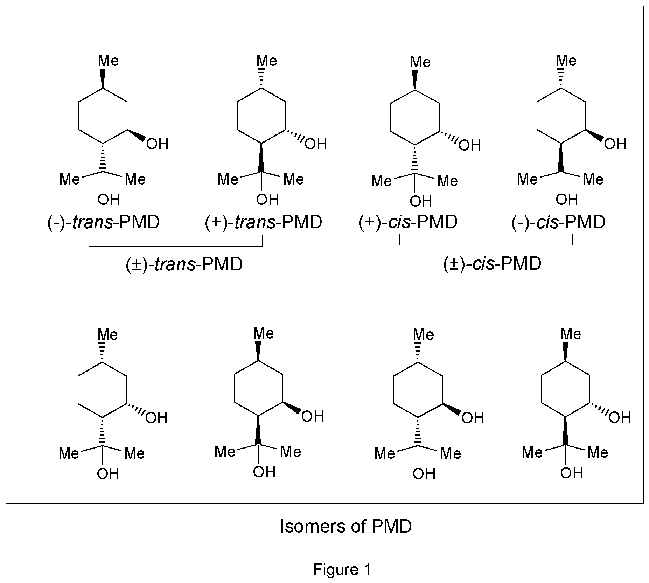

It is known that PMD predominantly exists in two geometric isomeric forms, namely the *cis* and *trans* isomers. Altogether, there are 8 isomers of PMD, as disclosed in Fig. 1.

This invention encompasses a combination of PMD isomers, comprising:
a) a combination of p-menthane-3,8-diol (PMD) isomers,
b) a glycoside,
c) an organic acid, and
d) a divalent metal halide salt

wherein said combination of PMD isomers comprises a substantially pure PMD enantiomer selected from (-)-*trans*-PMD, (+)-*trans*-PMD, (+)-*cis*-PMD and *(-)-cis-*PMD, in combination with either
   i) a PMD racemate selected from (±)-*trans*-PMD, comprising the enantiomers of formula (I) and (II): 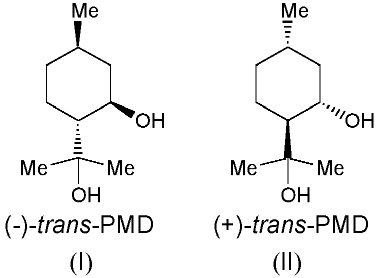 and (±)-cis-PMD comprising the enantiomers of formula (III) and (IV): 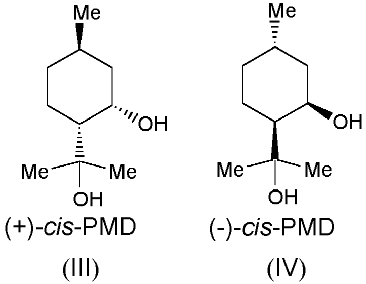 or
   ii) a substantially pure PMD enantiomer selected from (-)-*trans*-PMD, *(+)-trans-*PMD, (+)-*cis*-PMD and *(-)-cis-PMD,*
wherein in the case i), the weight ratio between the PMD racemate and the substantially pure PMD enantiomer is comprised between 1:99 and 99:1, and
wherein in the case ii), the combination of substantially pure PMD enantiomers comprises at least two different substantially pure PMD enantiomers, and
wherein any racemate formed by two substantially pure PMD enantiomers and a combination consisting of a pure enantiomer are excluded.

*trans*-PMD racemate, also named *trans*-PMD or (±)-*trans*-PMD in the present description, is composed of a mixture of the following enantiomers:

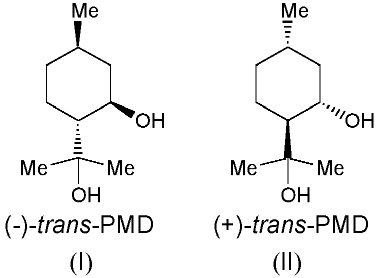

cis-PMD racemate also named *cis*-PMD or (±)-*cis*-PMD in the present description, is composed of a mixture of the following enantiomers:

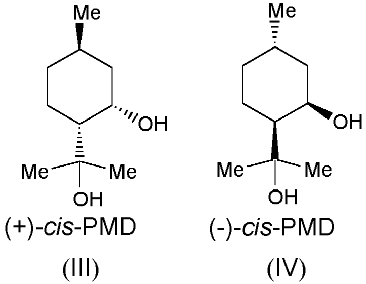

Different isomers of PMD, alone, as racemates or diastereomeric mixtures, show a repellent effect, as disclosed in Barasa *op. cit.* The different isomers show a difference in repellent effect towards *Aedes albopictus* mosquitoes according to Borrego *op. cit.* Insect repellent properties of PMD are also disclosed in Carroll et al., PMD a Registered Botanical Mosquito Repellent with DEET-Like Efficacy, J. Am. Mosquito Control Assoc., 2006, 22(3), 507-514) or Barnard et al., Laboratory Evaluation of Mosquito Repellents Against Aedes albopictus, Culex nigripalpus, and Ochlerotatus triseriatus (Diptera: Culicidae), J. Med. Entomol., 2004, 41(4), 726-730.

Antiseptic, antibiotic, fungicidal, bactericidal, antiviral, and hair growth activity of PMD have also been disclosed, for example, in US-A-2004/0247708, US-A-2007/0178048, EP-A-0934741, WO-A-01/05226, Smither et al., Investigative study into whether an insect repellent has virucidal activity against SARS-CoV-2, Microbiol. Soc., 2021, 102(4) (DOI 10.1099/jgv.0.001585).

PMD racemate and enantiomers thereof are commercially available through, for example, Takasago, Sigma-Aldrich, Parchem, or BOC Sciences, or can be prepared according to the procedure disclosed in Barasa *et al., op. cit.,* or in Borrego *et al., op. cit.,* or in Zimmerman et al., J. Am. Chem. Soc., 1953, 75, 2367-2370, or in Yuasa et al., Org. Proc. Res. Devel., 2000, 4(3), 159-161. PMD may also be derived by acid modification of the oil of *Corymbia citriodora* (the lemon eucalyptus), also known as *Eucalyptus citriodora* oil, which is grown commercially (e.g., commercially grown in Brazil and other Latin American countries). Citriodiol^{®} (Citrefine) is a product formed from a simple chemical modification under acidic conditions of the extract of the leaves of *Corymbia citriodora.* It comprises about 70 wt% of a mixture of *cis-* and *trans*-PMD racemates. This commercial product further comprises minor amounts of linear and cyclic terpenoid components, such as citronellal, citronellol and isopulegol isomers. *Eucalyptus citriodora* oil, hydrated, cyclized is also commercialised by other suppliers such as Chemian Technology SARL (Acting for Chemian Technology Limited (UK)) and Fulltec GmbH. This PMD enriched active substance is authorised for use in repellent products in the EU under the official name of "Eucalyptus citriodora oil, hydrated, cyclized" and in the US as "Oil of Lemon Eucalyptus" or "OLE". Another commercially available product is Citrepel^{®} 75 (Chemian), which is produced from an extract of *Cymbopogon winterianus* oil by fractionation, hydration and cyclization.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of a substantially pure PMD enantiomer selected from (-)-trans-PMD, (+)-trans-PMD, (+)-cis-PMD and *(-)-cis-*PMD, over the total PMD content, and at least another substantially pure PMD enantiomer selected from (-)-*trans*-PMD, (+)-*trans*-PMD, (+)-*cis*-PMD and *(-)-cis-*PMD up to 100 wt% over the total PMD content, and wherein the combined enantiomers are different.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-trans-PMD, and an amount of (+)-cis-PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-cis-PMD, and an amount of (-)-trans-PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-trans-PMD, and an amount of (-)-cis-PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-*cis*-PMD, and an amount of (-)-*trans-*PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-trans-PMD, and an amount of (+)-cis-PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-cis-PMD, and an amount of (+)-trans-PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-*trans*-PMD, and an amount of (-)-*cis*-PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-*cis*-PMD, and an amount of (+)-*trans*-PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-*cis*-PMD, and an amount of (-)-cis-PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-cis-PMD, and an amount of (+)-cis-PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-trans-PMD, and an amount of (+)-trans-PMD up to 100 wt% over the total PMD content.

In an embodiment, the formulation comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-*trans*-PMD, and an amount of (-)-*trans*-PMD up to 100 wt% over the total PMD content.

In an embodiment, the formulation comprises a combination of PMD isomers wherein said combination comprises a racemate PMD selected from (±)-*trans-*PMD and (±)-*cis*-PMD, and a substantially pure PMD enantiomer selected from (-)-*trans*-PMD, (+)-*trans*-PMD, (+)-*cis*-PMD and (-)-*cis*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.

In an embodiment, the formulation comprises a combination of PMD isomers, wherein said combination comprises (±)-trans-PMD and (-)-trans-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.

In an embodiment, the formulation comprises a combination of PMD isomers, wherein said combination comprises (±)-trans-PMD and (+)-trans-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.

In an embodiment, the formulation comprises a combination of PMD isomers, wherein said combination comprises (±)-trans-PMD and (-)-cis-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.

In an embodiment, the formulation comprises a combination of PMD isomers, wherein said combination comprises (±)-*trans-*PMD and (+)-*cis*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.

In an embodiment, the formulation comprises a combination of PMD isomers, wherein said combination comprises (±)-*cis*-PMD and (-)-*trans-*PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.

In an embodiment, the formulation comprises a combination of PMD isomers, wherein said combination comprises (±)-*cis-*PMD and (+)-*trans*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.

In an embodiment, the formulation comprises a combination of PMD isomers, wherein said combination comprises (±)-*cis*-PMD and (-)-*cis*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.

In an embodiment, the formulation comprises a combination of PMD isomers, wherein said combination comprises (±)-*cis*-PMD and (+)-*cis*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.

In a preferred embodiment, the formulation comprises between 60 wt% and 90 wt%, preferably between 70 wt% and 90 wt%, of (-)-trans-PMD and between 10 wt% and 40 wt%, preferably between 10 wt% and 30 wt%, of a PMD isomer selected from (+)-*trans*-PMD, (+)-*cis*-PMD, (-)-*cis*-PMD, (±)-*trans-*PMD and (±)*-cis-*PMD, over the total PMD content.

In a preferred embodiment, the formulation comprises 70 wt% of (-)*-trans-*PMD and 30 wt% of (+)-*trans*-PMD, over the total PMD content.

In a preferred embodiment, the formulation comprises 70 wt% of (-)*-trans-*PMD and 30 wt% of (+)-*cis*-PMD, over the total PMD content.

In a preferred embodiment, the formulation comprises 70 wt% of (-)*-trans-*PMD and 30 wt% of (±)-*cis*-PMD, over the total PMD content.

### Glycoside

The formulation of the invention comprises a glycoside. The glycoside incorporated to the long-duration formulation of the invention is capable of effectively releasing the combination of PMD isomers at a controlled rate, when applied to a surface and when present in combination with an organic acid and a divalent metal halide salt. Said combination of PMD isomers, which is present in free form in the long-duration formulation, is an efficient insect and parasite repellent having a long-duration effect, as shown in the examples, and also shows antiseptic, antibiotic, fungicidal, bactericidal, antiviral, and hair growth activity, as exposed above.

In the sense of the present invention, the term "glycoside" refers to mixed acetals (ketals) derived from cyclic forms of a reducing sugar compound, wherein the anomeric hydroxy group is replaced by a group -OR. The compound ROH is termed "aglycone", and the carbohydrate residue itself is referred to as "the glycone".

In the case where the sugar is glucose, terms "glucoside" and "glucopyranoside" are used indistinctly.

In an embodiment, the glycoside is a reducing sugar attached to a non-carbohydrate through a glycosidic linkage, wherein the glycosidic linkage may be either alpha (α) or beta (β), and wherein the sugar is a monosaccharide, a saccharide with a degree of polymerization comprised between 1.1 and 1.9, a disaccharide, or a trisaccharide.

In an embodiment, the reducing sugar is selected from monosaccharides, disaccharides, and trisaccharides.

In an embodiment, the reducing sugar is a monosaccharide selected from Land D-sugars.

In an embodiment, the reducing sugar is a monosaccharide selected, for example, from glucose, galactose, allose, altrose, mannose, gulose, idose, tallose, fucose, xylose and 2-deoxyglucose, *N*-acetylglucosamine, and mixtures thereof; preferably from D-glucose, D-galactose, D-allose, D-altrose, D-mannose, D-gulose, D-idose, D-tallose, and mixtures thereof; more preferably D-glucose or D-galactose; and yet more preferably the sugar is D-glucose.

In an embodiment, the reducing sugar is a disaccharide selected, for example, from lactose, maltose, cellobiose, chitobiose, kojibiose, nigerose, isomaltose, sophorose, laminaribiose, gentiobiose, turanose, maltulose, leucrose, isomultulose, gentiobiulose, mannobiose, melibiose, rutinose, rutinulose, xylobiose, and mixtures thereof; preferably lactose or maltose; and more preferably lactose.

In an embodiment, the reducing sugar is a trisaccharide selected, for example, from nigerotriose, maltotriose, maltotriulose, and mixtures thereof; preferably maltotriose.

In an embodiment, a primary hydroxy group present in the sugar may be functionalized as ether, amine, ester, amide, sulphate, phosphate, carbonate or carbamate.

In an embodiment, the non-carbohydrate (aglycone) moiety is an alcohol rest (-OR). The alcohol (ROH) may be selected from aliphatic or aromatic alcohols. A saccharide with a degree of polymerization comprised between 1.1 and 1.9, preferably between 1.2 and 1.6, is the sugar moiety of an alkyl polyglycoside, which is an industrial product obtained from renewable raw materials when the alcohol rest is selected from a C₈-C₁₈ hydrocarbon chain. Preferably the sugar moiety is glucose.

In a preferred embodiment, the glycoside is selected from hexyl glucoside, methyl-α-glucoside, phenyl-β-glucoside, geranyl-β-glucoside, methyl-α-D-mannopyranoside, methyl-α-D-galactopyranoside, and PMD glucovanillin conjugate; preferably selected from hexyl glucoside and methyl-α-glucoside.

In an embodiment, the glycoside is methyl-α-glucoside.

In an embodiment, the glycoside is hexyl glucoside.

### Organic acid

The formulation of the invention comprises an organic acid. The organic acid incorporated to the long-duration formulation of the invention is capable of effectively releasing the combination of PMD isomers when applied to a surface at a controlled rate when present in combination with a glycoside and a divalent metal halide salt. Free PMD, included in the formulation, is an efficient insect repellent having a long-duration effect.

Organic acids suitable to be included in said formulation are sulfonic acids, monocarboxylic acids, dicarboxylic acids, tricarboxylic acids, hydroxycarboxylic acids, and amino acids.

In an embodiment, the organic acid is a sulfonic acid selected, for example, from p-toluene sulfonic acid, benzene sulfonic acid and taurine.

In an embodiment, the organic acid is a carboxylic acid selected, for example, from oxalic acid, malonic acid, succinic acid, fumaric acid, and benzoic acid.

In an embodiment, the organic acid is a hydroxycarboxylic acid selected, for example, from lactic acid, tartaric acid, glycolic acid, malic acid, mandelic acid (2-hydroxy-2-phenylacetic acid), and citric acid.

In an embodiment, the organic acid is an amino acid selected, for example, from glycine, alanine, valine, leucine, isoleucine, aspartic acid, asparagine, glutamic acid, glutamine, serine, threonine, methionine, cysteine, lysine, arginine, histidine, proline, phenylalanine, tyrosine, and tryptophan.

In a preferred embodiment, the organic acid is selected from citric acid, succinic acid and anhydrous forms or hydrates thereof. In an embodiment it is used citric acid as anhydrous form or as hydrate, preferably monohydrate. In an embodiment, it is used succinic acid.

In an embodiment, the organic acid may be in equilibrium with the corresponding conjugated base, wherein the ratio between the species depends on the pH value of the formulation.

### Divalent metal halide salt

The formulation of the invention comprises a divalent metal halide salt. The divalent metal halide incorporated to the long-duration formulation of the invention is capable of effectively releasing the combination of PMD isomers when applied to a surface at a controlled rate when present in combination with a glycoside and an organic acid, being an efficient insect repellent.

Divalent metal halide salts suitable to be included in the formulation of the invention are selected from, for example, calcium chloride, magnesium chloride, magnesium bromide, zinc iodide, zinc chloride, zinc bromide, and cobalt chloride; preferably from zinc chloride, magnesium chloride and calcium chloride.

In an embodiment, the divalent metal halide salt is calcium chloride.

In an embodiment, the divalent metal halide salt is magnesium chloride.

In an embodiment, the divalent metal halide salt is zinc chloride.

### Long-duration formulation

The formulation comprises a combination of PMD isomers, hexyl glycoside, an organic acid, and a divalent metal halide salt.

In an embodiment, the formulation comprises per mole of PMD isomer:
a) between 0.01 and 2, preferably between 0.02 and 1.5, more preferably between 0.03 and 1.2, more preferably between 0.05 and 1, and yet more preferably between 0.07 and 0.75 mol of a hexyl glycoside.
b) between 0.05 and 3, preferably between 0.06 and 2.5, more preferably between 0.08 and 2, more preferably between 0.09 and 1.7, more preferably between 0.1 and 1.5 mol and yet more preferably between 0.12 and 1.24 mol of an organic acid, and
c) between 0.01 and 5 mol, preferably between 0.02 and 2 mol, more preferably between 0.03 and 1 mol, and yet more preferably between 0.06 and 0.58 mol of divalent metal halide salt.

In an embodiment, the formulation comprises a combination of PMD isomers, hexyl glucoside, an organic acid selected from citric acid and succinic acid, and a divalent metal halide salt selected from calcium chloride, magnesium chloride, magnesium bromide, zinc iodide, zinc chloride, zinc bromide, and cobalt chloride.

In an embodiment, the formulation comprises a combination of PMD isomers, hexyl glucoside, citric acid, and a divalent metal halide salt selected from calcium chloride, magnesium chloride, and zinc chloride.

In an embodiment, the formulation comprises a combination of PMD isomers, hexyl glucoside, succinic acid, and a divalent metal halide salt selected from calcium chloride, magnesium chloride, and zinc chloride.

In an embodiment, the content of the combination of PMD isomers in the long-duration formulation is able to deliver between about 0.1 mg and about 2 mg, preferably between about 0.1 mg to about 1 mg, more preferably between about 0.2 mg and about 0.8 mg, and more preferably between about 0.2 mg and about 0.7 mg of the combination of PMD isomers per square centimetre of a surface.

The release of the combination of PMD isomers is generally achieved by a variety of cosmetic compositions and devices that are widely used and known to those skilled in the art. Non limiting examples include solutions, creams, powders, pastes, sprays, lotions, films or impregnated into or onto materials such as wipes, masks and sticks, medical devices or surfaces.

Another aspect of the present invention is the use of the formulation as insect repellent.

It also forms part of the invention the formulation for use as medicament. In particular, for use as antiseptic, antibiotic, fungicidal, bactericidal, or antiviral.

As shown in the Examples section, the long-duration formulation of the invention provides surprisingly a slow and long release of the combination of PMD isomers. The efficacy of the long-duration formulation is shown by assessing the insect repellent effect of the combination of PMD isomers.

It also forms part of the invention a method of use of the formulation, which comprises the application of said formulation, either directly or in the form of a composition, onto a surface.

The formulation of the invention may be applied to any surface such as soft surfaces such as skin, hair, clothes, plants, or crops, grain storage, or hard surfaces such as wood, synthetic materials, or ceramic materials. In an embodiment, the formulation is applied to skin.

The manufacture of formulations including a combination of PMD isomers, a glycoside, an organic acid and a divalent metal halide is a matter of routine work for the skilled person. Information on the preparation of formulations in form of solutions, creams, pastes, powders, sprays, lotions, and films may be found in well-known handbooks, such as, for example, Remington The Science and Practice of Pharmacy, 20th Ed, Lippincott Williams & Wilkins, 2000, Philadelphia, Part 5, Pharmaceutical Manufacturing.

Surprisingly, the long-duration formulation is able to release the combination of PMD isomers present therein when combined with a glycoside, an organic acid and a divalent metal halide salt, showing high insect repellence and very low odour, in particular when the compound (-)-*trans*-PMD is present therein.

As shown in the examples disclosed in WO-A-2023/099327, the long-duration is obtained with different glucopyranosides (Example 7), different glycosides (Example 16), different organic acids (Examples 9 and 14), and different divalent metal halides (Example 15).

### Composition

A composition comprising the formulation of the invention also forms part of the object of the invention.

In an embodiment the composition comprises the formulation of the invention and a cosmetically acceptable component.

As used herein, "cosmetically-acceptable" means that the product(s) or compound(s) which the term describes are suitable for use in contact with tissues (e.g., the skin) without undue toxicity, incompatibility, instability, irritation, allergic response, and the like. This term is not intended to limit the ingredient/product, which it describes to use solely as a cosmetic

In an embodiment, the composition comprises:
a) between 5 wt% and 80 wt% of the formulation of the invention, and
b) between 20 wt% and 95 wt% of a cosmetically acceptable component,
where the percentages of the components are adjusted so that the balance is 100%.

The composition preferably comprises between 10 wt% and 75 wt% of the formulation of the invention, more preferably between 15 wt% and 65 wt%, more preferably between 20 wt% and 60 wt%, more preferably between 25 wt% and 50 wt%, and yet more preferably between 25 wt% and 40 wt%. In a preferred embodiment, the composition comprises between 25 wt% and 35 wt% of the formulation of the invention, more preferably about 30 wt%.

The composition comprises a cosmetically acceptable component, which in the context of the invention, is selected from a cosmetically acceptable vehicle, a cosmetic ingredient, and mixtures thereof.

A cosmetically acceptable vehicle (or carrier) is a vehicle in which the cosmetic ingredients are dissolved, emulsified, dispersed, or suspended. Said vehicle is selected from among water, a water-miscible non-aqueous vehicle, such as ethanol or isopropanol, and a water-immiscible non-aqueous vehicle, such as, for example, vegetable oil, fatty esters, medium chain triglycerides, or alkanes. Preferably the composition includes water as a vehicle.

In an embodiment, the cosmetic ingredient is preferably selected from: surfactants (emulsifiers), lipid compounds, emollients, factors of consistency, thickening agents, stabilizers, hydrotropes, preserving agents, fragrances, colorants, silicone compounds, fats, waxes, lecithins, phospholipids, UV sun protection factors, film-forming agents, and mixtures thereof.

The physical form of the composition for the use according to the invention is not important. Said composition may be made into a wide variety of product types that include but are not limited to solid and liquid compositions such as solutions, lotions, creams, gels, sticks, sprays, ointments, cleansing liquid washes and solid bars, shampoos, pastes, powders, foams, mousses, milks, emulsions, dispersions, suspensions, or wipes.

The topical compositions useful in the present invention may be formulated as solutions. Solutions may preferably include an aqueous solvent (e.g., from about 0 wt% to about 95 wt% or from about 20 wt% to about 85 wt% of a cosmetically acceptable aqueous solvent). More preferably, such compositions may contain about 20 wt% aqueous solvent, although this may vary dependent upon the formulation. Such solvents may include ethanol, isopropanol, glycerol (glycerine), propylene glycol, polyethylene glycol, mixtures thereof and the like, in combination with water. In an embodiment, the topical composition useful in the present invention may be formulated as a solution containing an emollient. Such composition preferably contains from about 2 wt% to about 50 wt% of an emollient. As used herein, "emollients" refer to materials used for the prevention or relief of dryness, as well as for the protection of the skin. In an embodiment, the solution is an anhydrous mixture comprising a non-aqueous solvent, comprising, for example, from about 20 wt% to about 85 wt% of a cosmetically acceptable non-aqueous solvent.

A lotion may be made from a solution. Lotions typically contain from about 1 wt% to about 20 wt% of an emollient and from about 50 wt% to about 90 wt% of water.

Another type of product may be a cream. A cream typically comprises from about 5 wt% to about 50 wt% of an emollient and from about 45 wt% to about 85 wt% of water.

Another type of product may be an ointment. An ointment may be constituted of a simple base of vegetable oils or semi-solid hydrocarbons. An ointment may contain from about 2 wt% to about 100 wt% of an emollient, and from about 0.1 wt% to about 5 wt% of a thickening agent.

The topical compositions useful in the present invention may also be preferably formulated as emulsions. In an embodiment, the composition contains water and a lipophilic phase and is presented in the form of emulsion or dispersion, such as, for example, the oil-in-water (O/W), water-in-oil (W/O) type, multiple emulsion (W/O/W), or PIT-type emulsion, or microemulsion. If the carrier is an emulsion, from about 1 wt% to about 10 wt% of the carrier should be made up one or more emulsifiers. Emulsifiers may be non-ionic, anionic, cationic, or amphoteric.

The topical composition useful in the present invention may be formulated as a gel. Suitable gelling agents for aqueous gels include, but are not limited to, natural gums, acrylic acid and acrylate polymers and copolymers, and cellulose derivatives (e.g., hydroxymethyl cellulose and hydroxypropyl cellulose). Suitable gelling agents for oils (such as vegetable oils, esters) include, but are not limited to, waxes, modified silicas, cellulose derivatives, polyamides, polyurethanes, and L-glutamic acid derivatives. Such gels typically comprise between about 0.1 wt% and 20 wt% of such gelling agents.

The composition useful for the use of the present invention are generally prepared by conventional methods such as are known in the art of making topical compositions. Such methods typically can involve mixing of the ingredients in one or more steps to a relatively uniform state, with or without heating, cooling, application of vacuum, and the like.

### Surfactants (emulsifiers)

In an embodiment, the composition can include surfactants (emulsifiers) to facilitate solution, emulsion, dispersion, or suspension of cosmetic components.

Surfactants can be anionic, non-ionic, cationic and/or amphoteric.

The content of surfactants is usually comprised between 1 wt% and 30 wt%, preferably between 2 wt% and 20 wt%, more preferably between 3 wt% and 10 wt%, and still more preferably between 4 wt% and 8 wt%.

Typical examples of anionic surfactants are, for example, soaps, sulfonated alkanes, sulfonated olefins, alkyl sulphates, fatty alcohol ether sulphates, glycerol ether sulphates, fatty acid ether sulphates, mono- and dialkyl sulfosuccinates, mono- and dialkyl sulfosuccinamates, ether carboxylic acids and their salts, fatty acid isethionates, fatty acid sarcosinates, fatty acid taurides, N-acylamino acids.

Typical examples of non-ionic surfactants are, for example, polyalkoxylated fatty alcohols, polyalkoxylated fatty acids, polyalkoxylated fatty acid amides, polyalkoxylated fatty amines, alkoxylated triglycerides, mixed ethers, alkylpolyglycosides, N-alkyl sorbitan esters, fatty acid esters polyethoxylated sorbitan, and amine oxides.

Typical examples of cationic surfactants are, for example, quaternary ammonium compounds, and quaternized salts of esters of trialkanolamines and fatty acids, for example Esterquats.

Typical examples of amphoteric surfactants are, for example, alkylbetaines, alkylamidobetaines, aminopropionates, aminoglycinates, imidazolinium betaines and sulfobetaines.

The aforementioned surfactants are exclusively known compounds, the structure and preparation of which are well known to those skilled in the art, and can be found, for example, in X. Domingo's book, A guide to the surfactants world, Proa, Barcelona, 1995.

### Lipid components and emollients

The composition usually contains additional lipid compounds and emollients to optimize their organoleptic and dermatological properties.

The lipid and emollient compounds are usually contained in a total amount of between 1 wt% and 50 wt%, preferably between 5 wt% and 25 wt%, and more preferably between 5 wt% and 15 wt%.

Suitable lipid compounds are Guerbet alcohols based on fatty alcohols with 6 to 18 carbon atoms, preferably with 8 to 10 carbon atoms (such as the product Eutanol^{®} G from the BASF company), linear fatty acid esters C₆₋₂₂ with linear C₆₋₂₂ alcohols, C₆₋₁₃ branched carboxylic acid esters with C₆₋₂₂ linear alcohols, such as myristyl myristate, myristyl palmitate, myristyl stearate, behenyl stearate, behenyl isostearate, behenyl oleate, behenyl behenate, behenyl erucate, or erucyl myristate.

Furthermore, C₆₋₂₂ linear fatty acid esters with branched alcohols are suitable, especially 2-ethylhexanol (for example the product Cetiol^{®} 868 from the BASF company), and isopropyl myristate; C₁₈₋₃₈ alkylhydroxycarboxylic acid esters with linear or branched C₆₋₂₂ fatty alcohols; linear and/or branched fatty acid esters with polyhydric alcohols, and/or Guerbet alcohols; triglycerides based on fatty acids with 6 to 10 carbon atoms (for example the product Mirytol^{®} 318 from the company BASF); liquid mixtures of mono/di/triglycerides based on fatty acids with 6 to 18 carbon atoms; esters of fatty alcohols with 6 to 22 carbon atoms, and/or Guerbet alcohols with aromatic carboxylic acids, especially benzoic acid; esters of dicarboxylic acids with 2 to 12 carbon atoms with linear or branched alcohols of 1 to 22 carbon atoms, or polyols with 2 to 10 carbon atoms and 2 to 6 hydroxyl groups; vegetable oils; branched primary alcohols; substituted cyclohexanes; linear and branched C₆₋₂₂ fatty alcohol carbonates, such as, for example, dicaprylyl carbonates (for example the product Cetiol^{®} CC from the BASF company); symmetric or asymmetric linear or branched dialkyl ethers with 6 to 22 carbon atoms per alkyl group, such as dicaprylyl ethers (for example the product Cetiol^{®} OE from the BASF company); aliphatic or naphthenic hydrocarbons, such as squalane, squalene or dialkylcyclohexanes, and mixtures thereof.

### Consistency factors and thickeners

Consistency factors and thickeners are generally used in the composition to adjust the viscosity and rheological behaviour.

Among the consistency factors that come into consideration are, firstly, fatty alcohols with a chain of 12 to 22 carbon atoms, and preferably of 16 to 18 carbon atoms, and furthermore partial glycerides, fatty acids or hydroxylated fatty acids.

Suitable thickening agents are, for example, hydrophilic silicic anhydride (such as the Aerosil^{®} products from the Evonik company); polysaccharides, especially xanthan gum, guar gum, agar-agar, alginates and tyloses, carboxymethylcellulose and hydroxyethylcellulose, as well as polyethylene glycol mono- and higher molecular weight fatty acid diesters; polyacrylates (for example Carbopol^{®} and Pemulen^{®} types from the Lubrizol company; Synthalene^{®} from the Sigma company, Keltrol^{®} types from the CP Kelco company; Sepigel^{®} and Simulgel^{®} types from the Seppic company; Salcare^{®} types from the company Allied Colloids company), polyacrylamides, polyvinyl alcohol, and polyvinylpyrrolidone.

### Hydrotropes

In order to improve the flowability of the composition, it is also possible to use hydrotropes, such as, for example, ethanol, isopropyl alcohol, or polyols. The polyols which come into consideration here preferably have from 2 to 15 carbon atoms and at least two hydroxyl groups. The polyols can also contain other functional groups, especially amino groups, or be modified with nitrogen. Typical examples are glycerol; alkylene glycols, such as, for example, ethylene glycol, diethylene glycol, propylene glycol, butylene glycol, hexylene glycol, as well as polyethylene glycols with an average molecular weight of 100 to 1,000 daltons; technical oligoglycerol mixtures with a degree of self-condensation of 1.5 to 10, for example technical diglycerol mixtures with a diglycerol content of 40 wt% to 50 wt%; methylol compounds, such as especially trimethylolmethane, trimethylolpropane, trimethylolbutane, pentaerythritol and dipentaerythritol; alkylglycosides with a chain of 1 to 8 carbon atoms in the alkyl moiety; C5-12 sugar alcohols, such as sorbitol or mannitol; sugars with 5 to 12 carbon atoms, such as glucose or sucrose; amino sugars, such as glucamine; dialcoholamines, such as diethanolamine or 2-amino-1,3-propanediol.

In an embodiment, glycerol, propylene glycol, and their mixtures are used as hydrotrope in the composition.

### Preservative agents

Suitable preservatives to be used in the composition include, by way of example, phenoxyethanol, 3-(4-chlorophenoxy)-1,2-propanediol (chlorphenesin), pentanediol or sorbic acid, and the classes of additional substances indicated in Annex V of the Regulation (EC) No 1223/2009 of the European Parliament and of the Council.

In an embodiment, the composition comprises at least one further insect repellent compound, which is selected from essential oils, natural insect repellents, synthetic repellents, and mixtures thereof.

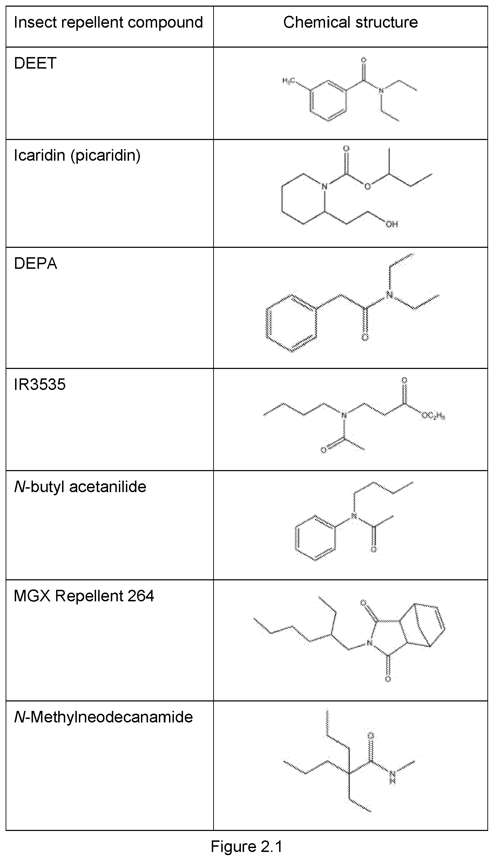

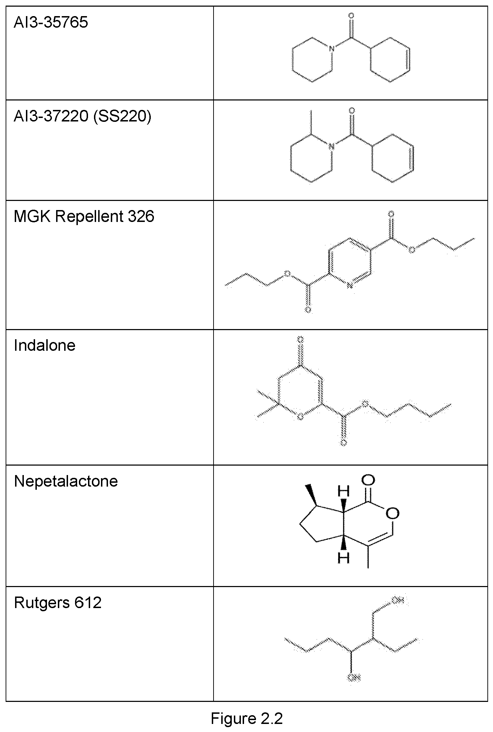

A further insect repellent compound is selected from, for example, DEET (*N*,*N*-diethyl-meta-toluamide), icaridin (picaridin), DEPA (*N,N-*diethyl phenylacetamide), IR3535, *N*-butyl-acetanilide, MGK Repellent 264, *N-*methylneodecanamide, Al3-35765, Al3-37220 (SS220), MGK Repellent 326, geraniol, thymol, eugenol, carvacrol, vanillin, limonene, nootkatone, spathulenol, dibutyl phthalate (DBP), dimethyl phthalate (DMP), dimethyl carbonate (DMC), dioctyl phthalate, benzyl benzoate, indalone, nepetalactone, methyl anthranilate, ethyl anthranilate, cyclohexane propionic acid, nonanoic acid, 2- ethylhexanoic acid, undecylenic acid, lactic acid, diol, 2-butyl-2-ethyl-1,3-propandiol, Rutgers 612, a pyrethroid, a carbamate, and mixtures thereof. The chemical structures of some insect repellent compounds are shown in Figures 2.1 and 2.2. In an embodiment, the composition comprises a further insect repellent compound selected from geraniol, nootkatone, neem oil, DEET, icaridin, IR3535, and mixtures thereof.

The present invention may be defined according to the following embodiments:
1.- A formulation comprising:
   a) a combination of p-menthane-3,8-diol (PMD) isomers,
   b) a glycoside,
   c) an organic acid, and
   d) a divalent metal halide salt

   wherein said combination of PMD isomers comprises a substantially pure PMD enantiomer selected from (-)-*trans*-PMD, (+)-*trans*-PMD, (+)-*cis*-PMD and *(-)-cis-PMD,* in combination with either
      i) a racemate PMD selected from (±)-*trans*-PMD, comprising the enantiomers of formula (I) and (II): 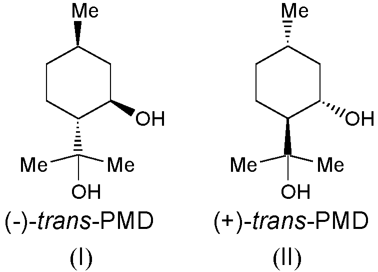 and (±)-cis-PMD comprising the enantiomers of formula (III) and (IV): 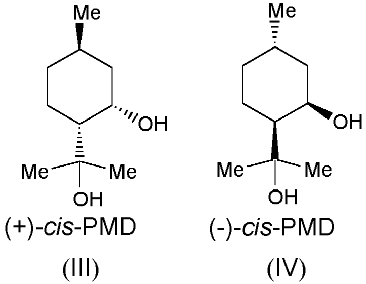 or
      ii) a substantially pure PMD enantiomer selected from (-)-trans-PMD, *(+)-trans-*PMD, (+)-cis-PMD and *(-)-cis-PMD,*
   wherein in the case i), the weight ratio between the racemate PMD and the substantially pure PMD enantiomer is comprised between 1:99 and 99:1, and
   wherein in the case ii), the combination of substantially pure PMD enantiomers comprises at least two different substantially pure PMD enantiomers, and wherein any racemate formed by two substantially pure PMD enantiomers and a combination consisting of a pure enantiomer are excluded.
2.- The formulation according to embodiment 1, wherein it comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of a substantially pure PMD enantiomer selected from (-)-trans-PMD, (+)-trans-PMD, (+)-cis-PMD and (-)-cis-PMD, over the total PMD content, and at least another substantially pure PMD enantiomer selected from (-)-trans-PMD, (+)-trans-PMD, (+)-cis-PMD and (-)-cis-PMD up to 100 wt% over the total PMD content, and wherein the combined enantiomers are different.
3.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-trans-PMD, and an amount of (+)-cis-PMD up to 100 wt% over the total PMD content.
4.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-cis-PMD, and an amount of (-)-trans-PMD up to 100 wt% over the total PMD content.
5.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-trans-PMD, and an amount of (-)-cis-PMD up to 100 wt% over the total PMD content.
6.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-cis-PMD, and an amount of (-)-trans-PMD up to 100 wt% over the total PMD content.
7.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-trans-PMD, and an amount of (+)-cis-PMD up to 100 wt% over the total PMD content.
8.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-cis-PMD, and an amount of (+)-trans-PMD up to 100 wt% over the total PMD content.
9.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-trans-PMD, and an amount of (-)-cis-PMD up to 100 wt% over the total PMD content.
10.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-cis-PMD, and an amount of (+)-trans-PMD up to 100 wt% over the total PMD content.
11.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-cis-PMD, and an amount of (-)-cis-PMD up to 100 wt% over the total PMD content.
12.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-cis-PMD, and an amount of (+)-cis-PMD up to 100 wt% over the total PMD content.
13.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (-)-trans-PMD, and an amount of (+)-trans-PMD up to 100 wt% over the total PMD content.
14.- The formulation according to embodiment 2, wherein the combination of PMD isomers comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of (+)-trans-PMD, and an amount of (-)-trans-PMD up to 100 wt% over the total PMD content.
15.- The formulation according to embodiment 1, wherein the combination of PMD isomers comprises a racemate PMD selected from (±)-trans-PMD and (±)*-cis-*PMD, and a substantially pure PMD enantiomer selected from (-)-trans-PMD, (+)-trans-PMD, (+)-cis-PMD and (-)-cis-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.
16.- The formulation according to embodiment 15, wherein the combination of PMD isomers comprises (±)-trans-PMD and (-)-trans-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.
17.- The formulation according to embodiment 15, wherein the combination of PMD isomers comprises (±)-trans-PMD and (+)-trans-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.
18.- The formulation according to embodiment 5, wherein the combination of PMD isomers comprises (±)-trans-PMD and (-)-cis-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.
19.- The formulation according to embodiment 15, wherein the combination of PMD isomers comprises (±)-*trans*-PMD and (+)-*cis*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.
20.- The formulation according to embodiment 15, wherein the combination of PMD isomers comprises (±)-*cis*-PMD and (-)-*trans*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.
21.- The formulation according to embodiment 15, wherein the combination of PMD isomers comprises (±)-*cis*-PMD and (+)-*trans*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.
22.- The formulation according to embodiment 15, wherein the combination of PMD isomers comprises (±)-*cis*-PMD and (-)-*cis*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.
23.- The formulation according to embodiment 15, wherein the combination of PMD isomers comprises (±)-*cis*-PMD and (+)-*cis*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.
24.- The formulation according to embodiment 1, wherein the combination of PMD isomers comprises between 60 wt% and 90 wt%, preferably between 70 wt% and 90 wt%, of (-)-*trans*-PMD and between 10 wt% and 40 wt%, preferably between 10 wt% and 30 wt%, of a PMD isomer selected from (+)-trans-PMD, (+)-cis-PMD, (-)*-cis*-PMD, (±)-*trans*-PMD, and (±)-*cis*-PMD, over the total PMD content.
25.- The formulation according to embodiment 1, wherein the combination of PMD isomers comprises 70 wt% of (-)-*trans*-PMD and 30 wt% of (+)-*trans-*PMD, over the total PMD content.
26.- The formulation according to embodiment 1, wherein the combination of PMD isomers comprises 70 wt% of (-)-*trans*-PMD and 30 wt% of (+)-*cis*-PMD, over the total PMD content.
27.- The formulation according to embodiment 1, wherein the combination of PMD isomers comprises70 wt% of (-)-*trans*-PMD and 30 wt% of (±)-*cis*-PMD, over the total PMD content.
28.- The formulation according to any one of embodiments 1 to 27, wherein the glucoside is selected from hexyl glucoside, methyl-α-glucoside, phenyl-β-glucoside, geranyl-β-glucoside, methyl-α-D-mannopyranoside, methyl-α-D-galactopyranoside, and PMD glucovanillin conjugate; preferably selected from hexyl glucoside and methyl-α-glucoside.
29.- The formulation according to any one of embodiments 1 to 27, wherein the organic acid is selected from sulfonic acids, monocarboxylic acids, dicarboxylic acids, tricarboxylic acids, hydroxycarboxylic acids, and amino acids.
30.- The formulation according to embodiment 29, wherein the organic acid is a sulfonic acid selected from p-toluene sulfonic acid, benzene sulfonic acid and taurine.
31.- The formulation according to embodiment 29, wherein the organic acid is a carboxylic acid selected from oxalic acid, malonic acid, succinic acid, fumaric acid, and benzoic acid.
32.- The formulation according to embodiment 29, wherein the organic acid is a hydroxycarboxylic acid selected from lactic acid, tartaric acid, glycolic acid, malic acid, mandelic acid (2-hydroxy-2-phenylacetic acid), and citric acid.
33.- The formulation according to embodiment 29, wherein the organic acid is an amino acid selected from glycine, alanine, valine, leucine, isoleucine, aspartic acid, asparagine, glutamic acid, glutamine, serine, threonine, methionine, cysteine, lysine, arginine, histidine, proline, phenylalanine, tyrosine, and tryptophan.
34.- The formulation according to embodiment 32, wherein the organic acid is selected from citric acid, succinic acid and anhydrous forms or hydrates thereof.
35.- The formulation according to embodiment 34, wherein the organic acid is citric acid as anhydrous form or as hydrate, preferably monohydrate.
36.- The formulation according to embodiment 34, wherein the organic acid is succinic acid.
37.- The formulation according to any one of embodiments 1 to 36, wherein the divalent metal halide salt is selected from calcium chloride, magnesium chloride, magnesium bromide, zinc iodide, zinc chloride, zinc bromide, and cobalt chloride, preferably from zinc chloride, magnesium chloride and calcium chloride.
38.- The formulation according to embodiment 37, wherein the divalent metal halide salt is calcium chloride.
39.- The formulation according to embodiment 37, wherein the divalent metal halide salt is magnesium chloride.
40.- The formulation according to embodiment 37, wherein the divalent metal halide salt is zinc chloride.
41.- The formulation according to embodiment 1, wherein it comprises per mole of PMD isomer:
   a) between 0.01 and 2, preferably between 0.02 and 1.5, more preferably between 0.03 and 1.2, more preferably between 0.05 and 1, and yet more preferably between 0.07 and 0.75 mol of a hexyl glycoside.
   b) between 0.05 and 3, preferably between 0.06 and 2.5, more preferably between 0.08 and 2, more preferably between 0.09 and 1.7, more preferably between 0.1 and 1.5 mol and yet more preferably between 0.12 and 1.24 mol of an organic acid, and
   c) between 0.01 and 5 mol, preferably between 0.02 and 2 mol, more preferably between 0.03 and 1 mol, and yet more preferably between 0.06 and 0.58 mol of divalent metal halide salt.
42.- The formulation according to embodiment 1, wherein it comprises a combination of PMD isomers, hexyl glucoside, an organic acid selected from citric acid and succinic acid, and a divalent metal halide salt selected from calcium chloride, magnesium chloride, magnesium bromide, zinc iodide, zinc chloride, zinc bromide, and cobalt chloride.
43.- The formulation according to embodiment 42, wherein it comprises a combination of PMD isomers, hexyl glucoside, citric acid, and a divalent metal halide salt selected from calcium chloride, magnesium chloride, and zinc chloride.
44.- The formulation according to embodiment 42, wherein in an embodiment, the formulation comprises a combination of PMD isomers, hexyl glucoside, succinic acid, and a divalent metal halide salt selected from calcium chloride, magnesium chloride, and zinc chloride.
45.- Use of the formulation according to any one of embodiments 1 to 44 as insect repellent.
46.- Formulation according to any one of embodiments 1 to 44 for use as medicament; preferably for use as antiseptic, antibiotic, fungicidal, bactericidal, or antiviral.
47.- A method of use of the formulation according to any one of embodiments 1 to 44, which comprises the application of said formulation, either directly or in the form of a composition, onto a surface.
48.- A composition comprising the formulation according to any one of embodiments 1 to 44.
49.- The composition according to embodiment 48, wherein it comprises:
   a) between 5 wt% and 80 wt% of the formulation according to any one of embodiments 1 to 42, and
   b) between 20 wt% and 95 wt% of a cosmetically acceptable component,
   where the percentages of the components are adjusted so that the balance is 100%.
50.- The composition according to embodiment 49, wherein the cosmetically acceptable component is selected from a cosmetically acceptable vehicle, a cosmetic ingredient, and mixtures thereof.
51.- The composition according to any one of embodiments 48 to 50, wherein it comprises at least one further insect repellent compound, which is selected from essential oils, natural insect repellents, synthetic repellents, and mixtures thereof.
52.- The composition according to embodiment 51, wherein the further insect repellent compound is selected from DEET (*N*,*N*-diethyl-meta-toluamide), icaridin (picaridin), DEPA (*N*,*N*-diethyl phenylacetamide), IR3535, *N*-butyl-acetanilide, MGK Repellent 264, *N*-methylneodecanamide, Al3-35765, Al3-37220 (SS220), MGK Repellent 326, geraniol, thymol, eugenol, carvacrol, vanillin, limonene, nootkatone, spathulenol, dibutyl phthalate (DBP), dimethyl phthalate (DMP), dimethyl carbonate (DMC), dioctyl phthalate, benzyl benzoate, indalone, nepetalactone, methyl anthranilate, ethyl anthranilate, cyclohexane propionic acid, nonanoic acid, 2- ethylhexanoic acid, undecylenic acid, lactic acid, diol, 2-butyl-2-ethyl-1,3-propandiol, Rutgers 612, a pyrethroid, a carbamate, and mixtures thereof.

In the following examples, the preparation of the compounds of the invention, and experiments related to the performance testing of the long-duration formulation are shown.

### EXAMPLES

¹H- and ¹³C-NMR spectra were obtained on a Varian Mercury 400 (400.1 Mz for 1H and 100.6 MHz for ¹³C) in deuterated chloroform, deuterated water or deuterated dimethylsulfoxide. High resolution mass spectra (HRMS) were acquired using an LC/MSD-TOF Mass Spectrometry Instrument (Agilent Technologies).

Reaction courses and product mixtures were monitored by thin-layer chromatography (TLC) on commercial silica gel 60 plates or by ¹H-NMR using the above instruments. For chromatography, column grade silica gel (0.040 - 0.063mm mesh size) was employed.

All other chemicals were purchased from Sigma-Aldrich (Merck) or from various commercial sources through Cymit Quimica.

### Preparative Example: Preparation of substantially pure PMD isomers

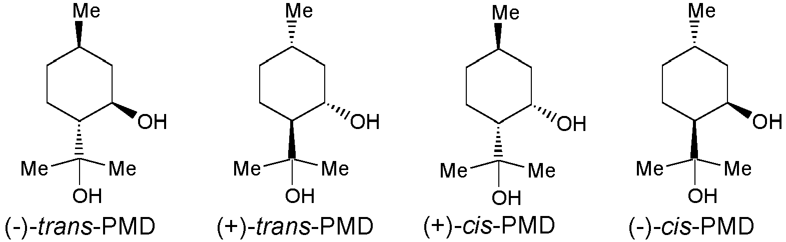

The substantially pure and pure isomers of PMD (-)-*trans*-PMD, (+)*-trans-*PMD, (+)-*cis*-PMD, and (-)-*cis*-PMD were prepared according to the procedure disclosed in Borrego *et. al., op. cit.*

Melting point, optical rotation ([α]_{D}²⁰), ¹H-NMR, ¹³C-NMR data were in agreement with those disclosed in the above-mentioned article.

Racemates were prepared by mixing the substantially pure PMD enantiomers.

### Examples 1 - 8: Preparation of PMD compositions

Long-duration compositions were prepared by mixing the following PMD isomers, either substantially pure PMD enantiomers or racemates. The proportions between the components and the final PMD stereoisomer composition are shown in Table I to Table II:

**TABLE I**

| Component | 1 | 2 | 3 | 4 |
|---|---|---|---|---|
| (-)-*trans*-PMD | 40 | - | 70 | - |
| (±)-*trans*-PMD | 60 | 30 | - | - |
| (+)-*cis*-PMD | - | 70 | - | 40 |
| (±)-*cis*-PMD | - | - | 30 | 60 |
| % (-)-*trans*-PMD | 70 | 15 | 70 | - |
| % (+)-*trans*-PMD | 30 | 15 | - | - |
| % (+)-*cis*-PMD | - | 70 | 15 | 70 |
| % (-)-*cis*-PMD | - | - | 15 | 30 |

**TABLE II**

| Component | 5 | 6 | 7 | 8 |
|---|---|---|---|---|
| (-)-*trans*-PMD | 60 | 30 | 80 | 90 |
| (±)-*trans*-PMD | - | - | 20 | - |
| (±)-*cis*-PMD | - | 70 | - | - |
| (+)-*cis*-PMD | 40 | - | | 10 |
| % (-)-*trans*-PMD | 60 | 30 | 90 | 90 |
| % (+)-*trans*-PMD | - | - | 10 | - |
| % (+)-*cis*-PMD | 40 | 35 | - | 10 |
| % (-)-*cis*-PMD | - | 35 | - | - |

The compositions further contained a glycoside (e.g., hexyl glucoside, methyl-α-glucoside, phenyl-β-glucoside, geranyl-β-glucoside, methyl- α-D-mannopyranoside, methyl- α-D-galactopyranoside), an organic acid (e.g., succinic acid, citric acid, lactic acid, tartaric acid, glycolic acid, malic acid), a divalent metal salt (e.g., calcium chloride, magnesium chloride, magnesium bromide, zinc iodide, zinc chloride, zinc bromide, and cobalt chloride), and cosmetically acceptable components selected from a cosmetically acceptable vehicle (e.g., ethanol, water), a cosmetic ingredient (e.g., surfactants (emulsifiers), lipid compounds, emollients, factors of consistency, thickening agents, stabilizers, hydrotropes, preserving agents, essences, colorants, silicone compounds, fats, waxes, lecithins, phospholipids, UV sun protection factors, film-forming agents, and mixtures thereof), and mixtures thereof. Optionally, the compositions comprised sodium hydroxide or hydrochloric acid for adjusting the pH.

The preparation of Example 1 was as follows: To a round bottomed flask was added absolute ethanol (46.00 g), deionised water (30.00 g), hexyl glucoside (12.80 g) and succinic acid (12.80 g). The mixture was shaken and 6.00 g of a mixture of 2.2 g of sodium hydroxide pellets in water 10 ml was added dropwise with shaking to afford a clear solution. Anhydrous magnesium chloride (4.80 g) was added and the mixture shaken until all solid had dissolved to give the base matrix as a clear colourless solution. The above matrix solution (5.62 g) was added to (-)-*trans*-PMD (0.60 g) and (±)-*trans*-PMD (0.90 g), glycerine (0.75 g), isopropyl myristate (0.20 g), absolute ethanol (0.9 g) and water (0.6 g) and the mixture shaken to give a clear solution.

This composition comprised 15.6 wt% of total PMD isomers, as the rest of compositions 1-6 according to the invention shown in this example. Compositions 7 and 8 comprised about 31.4 wt% of total PMD isomers.

### Comparative Examples 1 - 5: Preparation of PMD compositions

Comparative compositions were prepared by mixing ither a pure PMD enantiomer or a racemate. The proportions between the components and the final PMD stereoisomer composition are shown in Table III:

**TABLE III**

| Component | Comp. 1 | Comp. 2 |
|---|---|---|
| (-)-*trans*-PMD | 100* | - |
| (±)-*trans*-PMD | - | 100 |
| % (-)-*trans*-PMD | 100 | 50 |
| % (+)-*trans*-PMD | - | 50 |

| | | |
|---|---|---|
| • *A single enantiomer within the limits of detection of NMR analysis methods. | | |

The compositions comprised further components as disclosed in Examples 1-8. Comparative 1 and 2 comprised 30 wt% of total PMD isomers.

### Example 9: In vivo mosquito repellent effect test

In this example it was performed a comparison of the repellent effect of long duration compositions according to the invention and comparative compositions by *in vivo* arm-in-cage testing using *Aedes albopictus* mosquitoes.

The ECHA (European Chemical Agency) procedures (last update March 2022) were employed to design trials to test repellents against mosquitoes. The evaluation of repellent activity was carried out under controlled climatic conditions in a chamber volume of about 78 m³. All tests were undertaken with non-blood-fed females of Asian tiger mosquito, 5-10 days-old. Insects were reared under laboratory conditions: temperature of 25 ±2°C, relative humidity of 60 ± 5%, and photoperiod of 12:12h (L:D). They were given sugar water (5%) prior and during the testing period to promote their good shape. The work was conducted with 4 participants (2 males and 2 females, aged 19-54 years). All of them signed a written informed consent form explaining the purpose and procedures of the study as well as their role in the study. Participants were asked to avoid the use of fragrances, nicotine, alcohol and repellents 12 h prior to the test. Before the application of the repellent composition comprising 17 wt% of total PMD isomers, applied at 1 ml/cm², the skin to be exposed was washed with unscented soap, rinsed with water, rinsed with ethanol 70% and then dried with a towel. A conventional AIC (arm in cage) test (WHO, 2009 and EPA, 2010) was performed. Eight cages (2 per participant) of 30 x 30 x 30 cm were prepared 24 h before the test with a density of about 38 mosquitoes.

The repellent efficacy was assessed by measuring the number on landings over 8 h on 4 volunteers for each repellent composition and was expressed as the total landings over 8 h on the volunteers divided by the number of volunteers.

The repellent efficacy results are shown in Table IV:

**TABLE IV**

| Example | PMD isomers | Isomer ratio | Landings |
|---|---|---|---|
| 1 | (-)*-trans* / (+)*-trans* | 70:30 | 4* |
| 2 | (+)*-cis* / (-)*-trans* / (+)*-trans* | 70:15:15 | 1 |
| 3 | (-)*-trans* / (-)*-cis* / (+)-*cis* | 70:15:15 | 3 |
| 4 | (+)-*cis* / (-)-*cis* | 70:30 | 0 |
| 5 | (-)*-trans* / (+)*-cis* | 60:40 | 4 |
| 6 | (+)-*cis* / (-)*-trans* | 70:30 | 5 |
| 7 | (-)*-trans* / (+)-*trans* | 90:10 | 3 |
| 8 | (-)*-trans* / (+)-cis | 90:10 | 3 |
| Comp 1 | (-)*-trans* | 100 | 37 |
| Comp 2 | (±)-*trans* | 100 | 36 |

| | | | |
|---|---|---|---|
| *Mean landings on 3 volunteers. | | | |

Long-duration repellent compositions, according to the invention, showed weak odour, even at 31.4 wt% of total PMD isomers content.

The odour of the compositions was significantly lower, practically odourless, when the compound (-)-trans-PMD was present therein.

### Example 10: In vivo tick repellent effect test

The same formulation mixture used in Example 8 above was used.

The evaluation of repellent activity of said composition was carried out under controlled climatic conditions in a chamber volume of about 78m³, at temperature of 23±1 °C and relative humidity of 60±5%.

The tests were conducted, according to the ECHA standard protocol (https://echa.europa.eu/guidance-documents/guidance-on-biocides-legislation, last update November 2022), which is employed to design trials to test repellents against ticks.

For all experiments, laboratory-reared, adult females of *Ixodes ricinus* free of borreliae and TBE (Tick-borne encephalitis) virus were used, reared in a lab colony originating from wild ticks collected near Berlin (Insect Services Company). Ticks were more than 6 months blood-starved at the time of testing and therefore exhibited active host-seeking behaviour.

Prior to experiments, ticks were placed in a Petri dish where they randomly walked around, so that only ostensibly healthy and active ticks were used for the tests. To ascertain activity, only ticks moving up the vial or staying at the top of it were included. Ticks showing sufficient crawling activity were used for the test on the treated arm immediately after the control test, performed on the untreated arm of the of the same test person.

A line was drawn approximately 5 cm above the wrist to mark the beginning of the crossing zone (3 cm wide), from which the repellent is applied to the rest of the forearm. To mark the release point of the ticks, another line is drawn 3 cm below the crossing zone. Disease free ticks were placed on the back of the hand with a paint brush, 5 ticks per test (per exposure and person, being tested one by one). During the tests, the arm was inverted to promote upward movement toward the treated surface considering that ticks are negatively geotropic.

Mixture of Example 8 was applied to the forearm of three volunteers (1 male and 2 females) at an application rate of 1 ml/ 600 cm² and the repellent effect towards *Ixodes Ricinus* tick nymphs of the treated to untreated forearms of each volunteer assessed each hour for a total of 5 hours. Each tick was exposed to the repellent for 3 minutes.

According to the EU guideline, a tick was considered non-repelled if it crossed the 3 cm crossing zone above the wrist within less than 1 min after entering the treated area or if it stayed there for more than 1 min. Furthermore, a tick was considered repelled when, within the 3 min observation time, remained in the untreated area of the hand (does not crawl into the treated area) or dropped off, crossed the start line (repellent border) but turned back into the untreated area within less than 1 min after entering the treated area, or dropped off from the treated area within less than 1 min after entering the treated area.

The complete protection time (CPT) was defined as the time interval between the application of repellent and the time when the first tick has crossed the 3-cm mark in direction of the elbow.

Repellence percentage was calculated by recording the number of ticks crossing the line or dropping down from a treated arm opposed to a control arm.

The repellent mixture provided 100 % complete protection over the duration (5 h) of the experiment on all three volunteers.

## Claims

1. A formulation comprising:
a) a combination of *p*-menthane-3,8-diol (PMD) isomers,
b) a glycoside,
c) an organic acid, and
d) a divalent metal halide salt
wherein said combination of PMD isomers comprises a substantially pure PMD enantiomer selected from (-)-*trans*-PMD, (+)-*trans*-PMD, (+)-*cis*-PMD and (-)*-cis-PMD,* in combination with either
i) a racemate PMD selected from (±)*-trans*-PMD, comprising the enantiomers of formula (I) and (II): 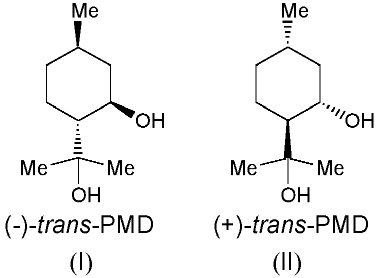 and (±)-*cis*-PMD comprising the enantiomers of formula (III) and (IV): 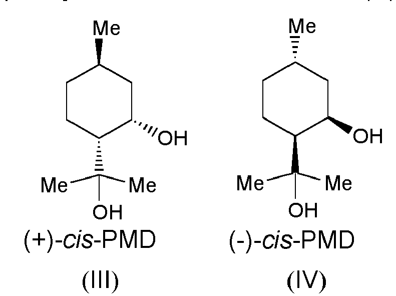 or
ii) a substantially pure PMD enantiomer selected from (-)-*trans*-PMD, *(+)-trans-*PMD, (+)-*cis*-PMD and (-)*-cis-PMD,*
wherein in the case i), the weight ratio between the racemate PMD and the substantially pure PMD enantiomer is comprised between 1:99 and 99:1, and
wherein in the case ii), the combination of substantially pure PMD enantiomers comprises at least two different substantially pure PMD enantiomers, and wherein any racemate formed by two substantially pure PMD enantiomers and a combination consisting of a pure enantiomer are excluded.

2. The formulation according to claim 1, wherein it comprises a combination of PMD isomers, wherein said combination comprises at least 51 wt%, at least 55 wt%, 60 wt%, at least 65 wt%, at least 70 wt%, at least 75 wt%, at least 80 wt%, at least 85 wt%, at least 90 wt%, at least 95 wt%, or at least 97 wt% of a substantially pure PMD enantiomer selected from (-)-trans-PMD, (+)-trans-PMD, (+)-*cis*-PMD and (-)-*cis*-PMD, over the total PMD content, and at least another substantially pure PMD enantiomer selected from (-)-*trans-*PMD, (+)-*trans*-PMD, (+)-*cis*-PMD and (-)-*cis*-PMD up to 100 wt% over the total PMD content, and wherein the combined enantiomers are different.

3. The formulation according to claim 1, wherein the combination of PMD isomers comprises a racemate PMD selected from (±)-*trans*-PMD and (±)-*cis-*PMD, and a substantially pure PMD enantiomer selected from (-)-*trans-*PMD, (+)-*trans*-PMD, (+)-*cis*-PMD and (-)-*cis*-PMD, wherein the weight ratio between the PMD racemate and the substantially pure PMD enantiomer is comprised between 1:99 and 99:1, between 5:95 and 95:5, between 10:90 and 90:10, between 20:80 and 80:20, between 30:70 and 70:30, between 40:60 and 60:40, or the weight ratio is 50:50.

4. The formulation according to claim 1, wherein the combination of PMD isomers comprises between 60 wt% and 90 wt%, preferably between 70 wt% and 90 wt%, of (-)-*trans*-PMD and between 10 wt% and 40 wt%, preferably between 10 wt% and 30 wt%, of a PMD isomer selected from (+)-*trans*-PMD, (+)-*cis*-PMD, (-)-*cis*-PMD, (±)-*trans*-PMD and (±)-*cis*-PMD, over the total PMD content.

5. The formulation according to any one of claims 1 to 4, wherein the glucoside is selected from hexyl glucoside, methyl-α-glucoside, phenyl-β-glucoside, geranyl-β-glucoside, methyl-α-D-mannopyranoside, methyl-α-D-galactopyranoside, and PMD glucovanillin conjugate; preferably selected from hexyl glucoside and methyl-α-glucoside.

6. The formulation according to any one of claims 1 to 5, wherein the organic acid is selected from sulfonic acids, monocarboxylic acids, dicarboxylic acids, tricarboxylic acids, hydroxycarboxylic acids, and amino acids.

7. The formulation according to any one of claims 1 to 6, wherein the divalent metal halide salt is selected from calcium chloride, magnesium chloride, magnesium bromide, zinc iodide, zinc chloride, zinc bromide, and cobalt chloride, preferably from zinc chloride, magnesium chloride and calcium chloride.

8. The formulation according to claim 1, wherein it comprises per mole of PMD isomer:
a) between 0.01 and 2, preferably between 0.02 and 1.5, more preferably between 0.03 and 1.2, more preferably between 0.05 and 1, and yet more preferably between 0.07 and 0.75 mol of a hexyl glycoside.
b) between 0.05 and 3, preferably between 0.06 and 2.5, more preferably between 0.08 and 2, more preferably between 0.09 and 1.7, more preferably between 0.1 and 1.5 mol and yet more preferably between 0.12 and 1.24 mol of an organic acid, and
c) between 0.01 and 5 mol, preferably between 0.02 and 2 mol, more preferably between 0.03 and 1 mol, and yet more preferably between 0.06 and 0.58 mol of divalent metal halide salt.

9. The formulation according to claim 1, wherein it comprises a combination of PMD isomers, hexyl glucoside, an organic acid selected from citric acid and succinic acid, and a divalent metal halide salt selected from calcium chloride, magnesium chloride, magnesium bromide, zinc iodide, zinc chloride, zinc bromide, and cobalt chloride.

10. Use of the formulation according to any one of claims 1 to 9 as insect repellent.

11. Formulation according to any one of claims 1 to 9 for use as medicament; preferably for use as antiseptic, antibiotic, fungicidal, bactericidal, or antiviral.

12. A composition comprising the formulation according to any one of claims 1 to 9.

13. The composition according to claim 12, wherein it comprises:
a) between 5 wt% and 80 wt% of the formulation according to any one of embodiments 1 to 42, and
b) between 20 wt% and 95 wt% of a cosmetically acceptable component,
where the percentages of the components are adjusted so that the balance is 100%.

14. The composition according to claim 12 or 13, wherein it comprises at least one further insect repellent compound, which is selected from essential oils, natural insect repellents, synthetic repellents, and mixtures thereof.

15. The composition according to claim 14, wherein the further insect repellent compound is selected from DEET (*N*,*N*-diethyl-meta-toluamide), icaridin (picaridin), DEPA (*N*,*N*-diethyl phenylacetamide), IR3535, *N*-butyl-acetanilide, MGK Repellent 264, N-methylneodecanamide, Al3-35765, Al3-37220 (SS220), MGK Repellent 326, geraniol, thymol, eugenol, carvacrol, vanillin, limonene, nootkatone, spathulenol, dibutyl phthalate (DBP), dimethyl phthalate (DMP), dimethyl carbonate (DMC), dioctyl phthalate, benzyl benzoate, indalone, nepetalactone, methyl anthranilate, ethyl anthranilate, cyclohexane propionic acid, nonanoic acid, 2- ethylhexanoic acid, undecylenic acid, lactic acid, diol, 2-butyl-2-ethyl-l,3-propandiol, Rutgers 612, a pyrethroid, a carbamate, and mixtures thereof.
